# FASCICULE DE BREVET EUROPEEN

(11) **EP 3 097 344 B1**
(45) Date de publication et mention de la délivrance du brevet: **29.08.2018**
(21) Numéro de dépôt: 15702520.6
(22) Date de dépôt: 06.01.2015
(51) Int. Cl.: F17C 13/02

(54) **ROBINET POUR BOUTEILLE DE FLUIDE SOUS PRESSION ET BOUTEILLE CORRESPONDANTE**
VENTIL FÜR EINEN UNTER DRUCK STEHENDEN FLUIDZYLINDER UND ENTSPRECHENDER ZYLINDER
VALVE FOR A PRESSURIZED FLUID CYLINDER AND CORRESPONDING CYLINDER

(30) Priorité: 22.01.2014 FR 1450528
(43) Date de publication de la demande: 30.11.2016
(73) Titulaire: L'Air Liquide Société Anonyme pour l'Etude et l'Exploitation des Procédés Georges Claude, 75007 Paris (FR)
(72) Inventeur: CARRON, Amélie, 94340 Joinville le Pont (FR); LOPEZ, Beatriz, F-75016 Paris (FR); REZEL, Christophe Roland, F-91600 Savigny sur Orge (FR); RUDNIANYN, Philippe, F-91700 Villiers Sur Orge (FR); VIVIER, Catherine, F-38120 Saint-Egreve (FR)
(74) Mandataire: De Cuenca, Emmanuel Jaime
(86) Numéro de dépôt international: PCT/FR2015/050011
(87) Numéro de publication internationale: WO 2015/110733

(56) Documents cités:
- EP-A2- 2 339 222
- WO-A2-2012/164240
- GB-A- 2 486 018
- US-A1- 2004 045 608
- US-A1- 2005 103 342
- US-A1- 2008 150 739
- US-A1- 2010 245 098

## Description

La présente invention concerne un robinet pour bouteille de fluide sous pression ainsi qu'une bouteille correspondante.

L'invention concerne plus particulièrement un robinet pour bouteille de fluide sous pression comprenant un corps muni d'une extrémité destinée à être montée dans l'orifice d'une bouteille, le corps du robinet abritant au moins un circuit de soutirage comprenant une première extrémité amont destinée à communiquer le volume de stockage d'une bouteille de fluide sous pression et une seconde extrémité aval destinée à être raccordée à un organe utilisateur du gaz soutiré, ledit au moins un circuit comprenant un organe d'isolement permettant d'ouvrir ou de fermer ledit circuit de soutirage, le robinet comprenant un dispositif électronique d'indication de donnée(s) relative(s) au contenu de fluide dans une bouteille raccordée au robinet, le dispositif électronique d'indication comprenant un organe d'acquisition de stockage et de traitement de données et au moins un afficheur de données relié à l'organe d'acquisition de stockage et de traitement de données, le robinet comprenant en outre un capteur de pression destiné à mesurer la pression au sein du volume de stockage d'une bouteille de fluide raccordée au robinet, le capteur de pression étant relié à l'organe d'acquisition de stockage et de traitement de données pour transmettre à ce dernier un signal représentatif de la pression de fluide mesurée.

L'invention concerne un robinet pourvu d'un dispositif électronique d'indication de données physiques relatives au contenu d'une bouteille de fluide sous pression notamment du gaz sous pression. L'invention concerne notamment un dispositif dit de manomètre électronique et digital. On pourra se référer par exemple au document FR2868160A1 qui décrit un exemple de tel dispositif.

Un tel dispositif comprend un capteur de pression et une logique électronique qui calcule et affiche des données de quantité de fluide et/ou d'autonomie.

Pour calculer et afficher une telle information fiable d'autonomie le dispositif doit réaliser plusieurs mesures de pression successives avant d'évaluer le débit sélectionné par l'utilisateur du robinet. Ceci génère un temps de calcul qui ne permet pas d'afficher de façon immédiate une autonomie ou de débit de soutirage sélectionné. Un temps de trente à soixante secondes peut par exemple être nécessaire. De plus, ce dispositif a également un temps de réaction identique en cas de changement des paramètres de soutirage (changement du débit de soutirage sélectionné...).

Le document WO2012164240A2 décrit un robinet conforme au préambule de la revendication 1.

De plus, une bouteille de fluide sous pression (oxygène gazeux notamment) peut être utilisée pour différentes applications (alimentation d'un ventilateur ou directement d'un patient). Dans certains cas les dispositifs connus ne permettent pas de renseigner utilement les utilisateurs.

Un tel dispositif ne permet par ailleurs pas de signaler certaines situations à risque ou certaines défaillances.

Un but de la présente invention est de pallier tout ou partie des inconvénients de l'art antérieur relevés ci-dessus.

A cette fin, le robinet selon l'invention comprend les caractéristiques de la partie caractérisante de la revendication 1.

C'est-à-dire que l'organe d'acquisition de stockage et de traitement de données est configuré pour mesurer la variation du signal représentatif de la pression de fluide sur la base du signal fourni par le capteur de pression et comparer cette variation du signal mesuré à un seuil de soutirage déterminé et, lorsque la variation du signal représentatif de la pression de fluide mesuré par le capteur de pression est supérieure au seuil de soutirage déterminé, l'organe d'acquisition de stockage et de traitement de données est configuré pour détecter le début d'un soutirage de gaz et, en réponse, pour commander l'affichage sur afficheur d'au moins une information relative audit soutirage dont le début a été détecté par le capteur de pression, lorsque la variation du signal représentatif de la pression de fluide mesuré par le capteur de pression est supérieure audit seuil soutirage, l'organe d'acquisition de stockage et de traitement de données étant configuré pour détecter, à partir du signal du capteur de pression, au moins une caractéristique de l'allure de la variation de pression de fluide dans la bouteille du fait du soutirage, ladite caractéristique de l'allure de la variation de pression de fluide dans la bouteille comprend au moins l'un parmi: un caractère périodique de la variation de pression ou de la variation de quantité, la fréquence de la variation de pression ou de quantité, une moyenne des mesures de pression, les maximum et minimum des mesures de pression, une valeur moyenne ou instantanée de la variation de pression, l'organe d'acquisition de stockage et de traitement de données étant configuré pour comparer au moins une caractéristique de l'allure de la variation de pression détectée avec une caractéristique d'allure de variation de pression déterminée représentative de la consommation en gaz d'un ventilateur médical et, lorsque la différence en valeur absolue entre ladite caractéristique détectée et la caractéristique déterminée est inférieure à un seuil déterminé, détecter un soutirage correspondant à l'alimentation en fluide d'un ventilateur médical et commander l'affichage sur afficheur d'au moins une information correspondante relative à l'alimentation en fluide d'un ventilateur médical.

Ceci permet d'indiquer rapidement et automatiquement à l'utilisateur que du gaz est soutiré, soit du fait d'une alimentation vers un ventilateur médical, soit du fait d'une fuite.

Par ailleurs, des modes de réalisation de l'invention peuvent comporter l'une ou plusieurs des caractéristiques suivantes :
- le robinet comprend un premier et un second circuits de soutirage, le premier circuit de soutirage comprenant chacun une première extrémité amont destinée à communiquer le volume de stockage d'une bouteille de fluide sous pression et une seconde extrémité aval destinée à être raccordée à un organe utilisateur du gaz soutiré, le premier circuit de soutirage comprenant un organe de régulation du débit et/ou de la pression du fluide soutiré entre ses extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps, l'organe de régulation étant déplaçable entre au moins une position d'ouverture du circuit et une position dite « de fermeture » correspondant à une fermeture du premier circuit de soutirage, en position de fermeture de l'organe de régulation le débit de fluide admis à passer de l'extrémité amont vers l'extrémité aval étant nul, c'est-à-dire que l'organe d'isolement du premier circuit comprend l'organe de régulation, le robinet comportant un capteur de position de l'organe de régulation, relié à l'organe d'acquisition de stockage et de traitement de données pour transmettre à ce dernier un signal représentatif de sa position d'ouverture ou de fermeture, le second circuit de soutirage comprenant une portion évitant l'organe de régulation du débit et/ou la pression du premier circuit de soutirage et, lorsque l'organe de régulation est dans sa position de fermeture et que la variation du signal représentatif de la pression de fluide au sein d'une bouteille est supérieure au seuil de soutirage, l'organe d'acquisition de stockage et de traitement de données est configuré pour détecter un soutirage de fluide via le second circuit de soutirage ou via une fuite de fluide et commander l'affichage sur l'afficheur d'une information relative à ce soutirage,
- le capteur de position de l'organe d'isolation mesure ou détecte la position de l'organe de commande manuelle de l'organe de régulation, le capteur de position étant relié à l'organe d'acquisition de stockage et de traitement de données pour transmettre à ce dernier un signal représentatif du débit et/ou la pression de fluide imposé par l'organe de régulation à partir de la position détectée de l'organe de commande,
- en réponse au signal de débit et/ou de pression imposé mesuré par le capteur de position et au signal de pression mesurée par le capteur de pression, l'organe d'acquisition de stockage et de traitement de données est configuré pour calculer et afficher sur l'afficheur une information relative au mode d'utilisation du robinet (soutirage via le premier ou via le second circuit de soutirage et éventuellement une information relative à une éventuelle fuite,
- lorsque l'organe de régulation est dans sa position de fermeture et que la variation du signal représentatif de la pression de fluide mesuré par le capteur de pression est inférieure au seuil de soutirage, l'organe d'acquisition de stockage et de traitement de données est configuré pour commander l'affichage sur l'afficheur d'une information fixe relative à la pression et/ou la quantité de fluide dans la bouteille,
- le seuil de soutirage correspond à une valeur comprise entre 5 et 15 mbar/minute et de préférence égal à 10mbar/minute (0,05l/min),
- lorsque l'organe de régulation est dans sa position de fermeture et que la variation du signal représentatif de la pression de fluide est supérieure au seuil de soutirage, l'organe d'acquisition de stockage et de traitement de données est configuré pour calculer une information d'autonomie de fluide restant à partir de la mesure du signal de pression initiale et de la variation, à partir de ce signal de pression donné par le capteur de pression, et en ce que l'organe d'acquisition de stockage et de traitement de données est configuré pour commander l'affichage sur l'afficheur de cette information d'autonomie calculée et/ou une information relative à la pression ou la quantité initiale de fluide dans la bouteille.
- tout ou partie des informations détectées et/ou calculées sont affichées sur l'afficheur et/ou transmises par signal électrique avec ou sans fil et/ou signalées par voie sonore,
- au moins l'un des composants et notamment l'un des capteurs (de position, de pression) est du type électrique et alimenté par une pile et/ou un système inductif, ledit au moins un composant pouvant être alimenté de façon non continue pour économiser de l'énergie, l'organe d'acquisition de stockage et de traitement de données peut être configuré pour assurer cette alimentation électrique au moment d'une mesure.

L'invention concerne également une bouteille comprenant un robinet selon l'une quelconque des caractéristiques ci-dessus ou ci-dessous.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple de possible de réalisation de l'invention,
- la figure 2 illustre de façon schématique et partielle, la structure et le fonctionnement d'une partie du robinet de la figure 1,
- les figures 3 à 5 illustrent de façon schématique et partielle, la structure et le fonctionnement de respectivement trois exemples de capteurs de position d'un robinet selon l'invention,
- la figure 6 représente schématiquement deux courbes illustrant des exemples de signaux générés par un ou des capteurs de position de la figure 5,
- les figures 7 et 8 illustrent de façon schématique et partielle, la structure et le fonctionnement de respectivement, un quatrième exemple et un cinquième exemple de capteur de position du robinet selon l'invention,
- la figure 9 représente schématiquement un exemple de courbe de pression mesurée en fonction du temps.

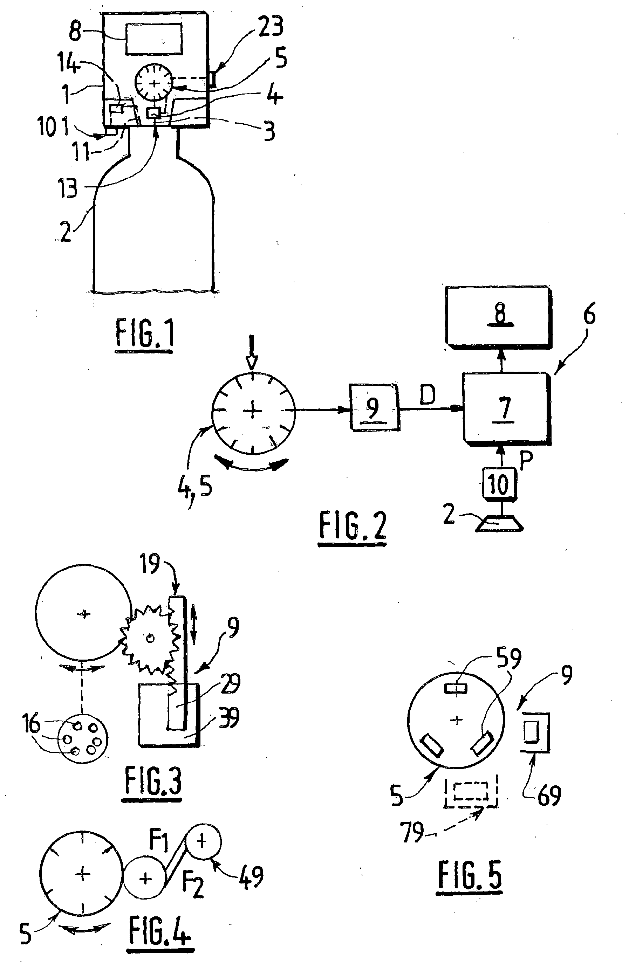

La figure 1 représente schématiquement une bouteille 2 de gaz sous pression munie d'un robinet 1 susceptible de mettre en oeuvre l'invention.

Le robinet 1 comprenant un corps muni d'une extrémité destinée à être montée dans l'orifice d'une bouteille 2 de fluide sous pression (par exemple par vissage).

Classiquement le corps du robinet abritant au moins un circuit 11 de soutirage comprenant une première extrémité amont destinée à communiquer le volume de stockage d'une bouteille de fluide sous pression et une seconde extrémité aval destinée à être raccordée à un organe utilisateur du gaz soutiré, par exemple via un clapet raccord de sortie 101 auto-obturant c'est-à-dire intégrant un clapet de fermeture qui est ouvert par une prise de soutirage qui s'y raccorde (par exemple via une prise crantée).

Ce clapet intégré au raccord 101 de sortie forme ainsi un organe d'isolement permettant d'ouvrir ou de fermer ledit circuit 11 de soutirage. Bien entendu, à la place ou en plus de ce clapet, un clapet d'isolement distinct peut être prévu sur le circuit 11. De même, et comme représenté à la figure 1, un régulateur de débit ou un détendeur 14 peut être prévu dans ce circuit 11.

Ce circuit 11 de soutirage est par exemple prévu pour fournir un gaz à une pression régulée (via un détendeur 14 de pression). Par exemple, le second circuit 11 de soutirage fournit une pression réglable ou fixe et de l'ordre de 3 à 10 bar à un appareil utilisateur.

Le robinet comprend également un dispositif 6 électronique d'indication de donnée(s) relative(s) au contenu de fluide dans une bouteille raccordée au robinet 1.

Le dispositif 6 électronique d'indication comprend de préférence un organe 7 d'acquisition de stockage et de traitement de données et au moins un afficheur 8 de données relié à l'organe 7 d'acquisition de stockage et de traitement de données. L'organe 7 d'acquisition de stockage et de traitement de données comprend par exemple un calculateur et/ou un microprocesseur ou tout autre système équivalent. Bien entendu, ce dispositif peut comporter un ou plusieurs organes de réception de données (par connexion filaire et/ou sans fil) ainsi que un ou plusieurs organes d'émission de données (par connexion filaire et/ou sans fil).

Le robinet comprenant en outre un capteur 10 de pression destiné à mesurer la pression au sein du volume de stockage d'une bouteille 2 de fluide raccordée au robinet 1 (cf. figure 2).

Le capteur 10 de pression est relié à l'organe 7 d'acquisition de stockage et de traitement de données pour transmettre à ce dernier (par voie filaire et/ou sans fil) un signal représentatif de la pression de fluide mesurée, notamment en temps réel ou périodiquement.

Selon une caractéristique avantageuse, lorsque la variation du signal représentatif de la pression de fluide mesuré par le capteur 10 de pression est supérieure à un seuil de soutirage déterminé (un seuil minimum), l'organe 7 d'acquisition de stockage et de traitement de données est configuré pour détecter un soutirage de gaz et, en réponse, pour commander l'affichage sur afficheur 8 d'au moins une information relative audit soutirage. C'est-à-dire que l'organe 7 d'acquisition de stockage et de traitement de données permet de détecter un soutirage et informer de façon pertinente l'utilisateur.

De préférence, lorsque la variation du signal représentatif de la pression de fluide mesuré par le capteur 10 de pression est supérieure audit seuil soutirage, l'organe 7 d'acquisition de stockage et de traitement de données est configuré pour détecter, à partir du signal du capteur 10 de pression, au moins une caractéristique de l'allure de la variation de pression de fluide dans la bouteille du fait du soutirage.

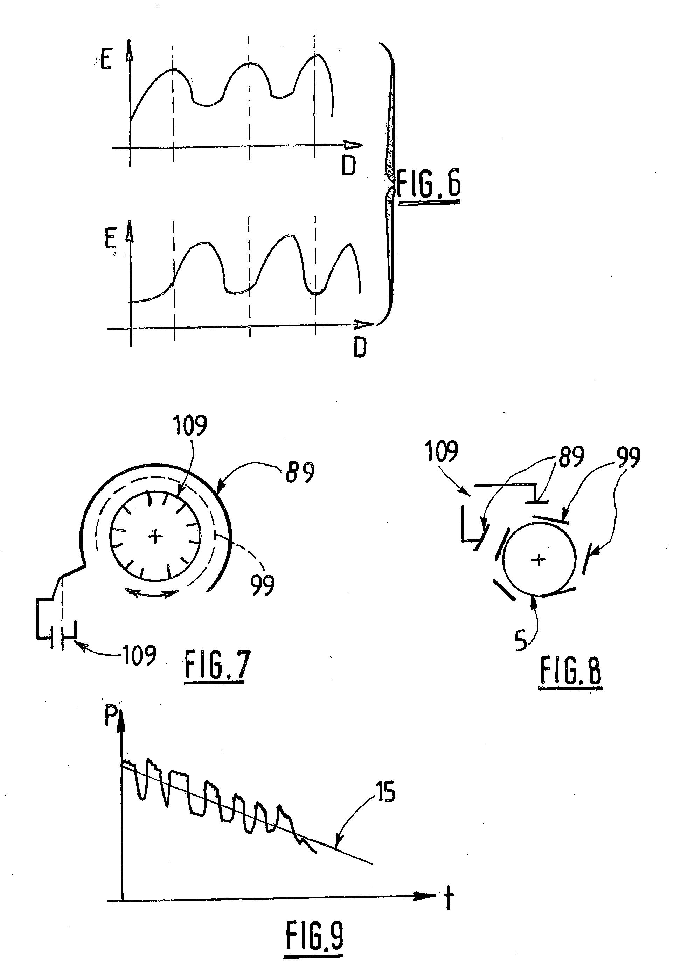

La au moins une caractéristique de l'allure de la variation de pression de fluide dans la bouteille comprend par exemple au moins l'un parmi: un caractère périodique de la variation de pression ou de la quantité, la fréquence de la variation de pression ou de quantité (cf. figure 9 qui illustre un exemple de variation de pression P en fonction du temps).

C'est-à-dire que l'organe 7 d'acquisition de stockage et de traitement de données peut être configuré pour détecter un soutirage correspondant à l'alimentation en fluide d'un ventilateur médical à partir de ladite caractéristique de l'allure de la variation de pression de fluide dans la bouteille et pour commander l'affichage sur afficheur 8 d'au moins une information correspondante relative à l'alimentation en fluide d'un ventilateur médical. Ceci permet de renseigner utilement un utilisateur notamment en lui indiquant que la bouteille alimente un ventilateur médical. L'organe 7 d'acquisition de stockage et de traitement de données peut fournir des informations pertinentes relatives à cette utilisation.

Comme illustré à la figure 1, le corps du robinet 1 peut abriter un autre circuit 3 de soutirage (distinct au moins partiellement du précédent circuit 11) comprenant une première extrémité 13 amont communiquant avec le volume de stockage de la bouteille 2. Ce circuit 3 de soutirage peut comprendre une seconde extrémité 23 aval destinée à être raccordée à un organe utilisateur du gaz soutiré (par exemple un patient dans le cas d'oxygène ou d'un autre gaz médical).

Ce circuit 3 de soutirage comprend de préférence un organe 4 de régulation du débit et/ou de la pression du fluide soutiré entre les extrémités amont 13 et aval 23. Cet organe 4 de régulation est par exemple un régulateur de débit à orifices calibrés 16 permettant de sélectionner un débit de gaz soutiré (cf. la représentation schématiquement de la figure 3). Bien entendu tout autre organe de régulation peut être envisagé.

Le robinet 1 comprend un organe 5 de commande manuelle de l'organe 4 de régulation. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet. L'organe 5 de commande comprend par exemple un volant rotatif. Bien entendu, tout autre système approprié peut être envisagé (levier pivotant, commande digitale, commande sans fil via une télécommande...). Par exemple, l'organe 5 de commandes sélectionne un orifice calibré et/ou commande une vanne de restriction de débit en fonction de sa position parmi une pluralité de positions discrètes stables ou une pluralité de positions d'un déplacement continu.

. Le robinet 1 peut comporter avantageusement un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif du débit et/ou la pression de fluide imposé par l'organe 4 de régulation. Par exemple, le capteur 9 de position de l'organe 5 de commande comprend un convertisseur du déplacement mécanique de l'organe de commande en un signal électrique exploitable par l'organe 7 d'acquisition de stockage et de traitement de données.

Le détecteur est par exemple solidaire d'une partie fixe du robinet, ou respectivement de l'organe de commande, le détecteur 69, 79 fournissant un signal électrique ou numérique déterminé en fonction de la position de l'organe 5 de commande. Ce signal peut être fourni par voie filaire et/ou sans fil.

Le capteur 9 de position de l'organe 5 de commande peut comprendre par exemple au moins l'un parmi : un capteur capacitif, un capteur magnétique, un capteur mécanique.

L'organe 7 d'acquisition de stockage et de traitement de données peut être configuré, en réponse à la réception du signal de pression délivré par le capteur 10, pour calculer et afficher sur l'afficheur 8 une information d'autonomie ou de contenu de fluide restant.

De préférence l'organe 5 de commande manuelle de l'organe 4 de régulation est déplaçable dans une position dite « de fermeture » correspondant une fermeture du circuit 3 de soutirage concerné. C'est-à-dire que le débit de fluide admis à passer de l'extrémité 13 amont vers l'extrémité aval 23 est nul. Dans le cas où l'organe 5 de commande manuelle est dans sa position de fermeture et que la variation du signal représentatif de la pression de fluide au sein d'une bouteille 2 est inférieure à un seuil de variation déterminé (par exemple équivalent à une chute de pression de 10 mbar / min (0,05l/min) mesuré par le capteur 10 de pression, l'organe 7 d'acquisition de stockage et de traitement de données est configuré de préférence pour commander l'affichage sur l'afficheur 8 d'une information fixe relative à la pression et/ou la quantité de fluide dans la bouteille 2.

C'est-à-dire que le dispositif détecte que la bouteille 12 n'est pas soutirée et affiche par exemple une information relative à son contenu.

Dans le cas où l'organe 4 de régulation n'est pas commun aux deux circuits 3, 11 de soutirage, un soutirage via l'un 11 des circuits est donc possible même si cet organe 4 de régulation est en position fermée.

Le circuit 11 de soutirage peut par exemple soutirer du gaz de la bouteille 2 indépendamment du circuit 3 de soutirage muni de l'organe 4 de régulation.

Ainsi, lorsque l'organe 5 de commande manuelle est dans sa position de fermeture et que la variation du signal représentatif de la pression de fluide au sein d'une bouteille 2 (mesuré par le capteur 10 de pression) est supérieure à un seuil de variation déterminé (par exemple 25mbar par minute), l'organe 7 d'acquisition de stockage et de traitement de données peut détecter un soutirage de fluide via le second circuit 11 de soutirage ou, si ce second circuit 11 de soutirage n'est pas utilisé, signaler une éventuelle fuite de fluide.

L'organe 7 d'acquisition de stockage et de traitement de données peut le cas échéant commander l'affichage sur l'afficheur 8 ou l'envoi (sans fil, par voie filaire ou par voie sonore) d'une information relative à un soutirage via le circuit 11 de soutirage concerné et ou relative à une fuite (signal d'alerte).

En particulier, lorsque l'organe 5 de commande manuelle est dans sa position dite de fermeture et que la variation du signal représentatif de la pression de fluide au sein d'une bouteille est supérieure à un seuil de variation déterminé (par exemple 25 mbar par minute), l'organe 7 d'acquisition de stockage et de traitement de données peut être configuré pour détecter au moins une caractéristique de l'allure de la variation de pression de fluide dans la bouteille du fait du soutirage via le circuit de soutirage 11 concerné (comme décrit précédemment).

Comme illustré schématiquement à la figure 9, ceci permet de détecter au bout de deux à trois oscillations de pression par exemple un soutirage périodique correspondant à une alimentation en gaz d'un ventilateur respiratoire. En effet, même si le gaz soutiré ne passe pas par le régulateur 4 de débit, le débit est régulé directement par un ventilateur et dépend de la respiration du patient. Ce débit ainsi délivré n'est pas constant mais oscille dans le temps (selon la respiration du patient).

L'organe 7 d'acquisition de stockage et de traitement de données peut être configuré pour détecter (reconnaître) une chute de pression caractéristique d'une ventilation selon le principe suivant :
- mesure du signal de pression de façon périodique rapprochée (par exemple toutes les 0,1 à deux secondes, notamment toutes les secondes),
- identification d'un signal de type créneau ayant une fréquence de cinq à vingt-cinq créneaux (respirations) par minute).

Pour calculer l'autonomie restante en gaz à partir d'un tel signal, l'organe 7 d'acquisition de stockage et de traitement de données peut être configuré pour mesurer la chute de pression sur les optimums pour en déduire la pente de décroissance équivalente (cf. référence 15 à la figure 9). Alternativement ou cumulativement, l'organe 7 d'acquisition de stockage et de traitement de données peut être configuré pour faire une moyenne de baisse de pression sur un temps relativement long (plusieurs minutes par exemple dix minutes) de façon à effacer les imprécisions d'image.

Dans le cas où ce signal de pression ne correspond pas à un signal de ventilation (par exemple une variation décroissante continue), l'organe 7 d'acquisition de stockage et de traitement de données peut déterminer qu'il s'agit d'une fuite ou d'une utilisation incorrecte du gaz et peut le signaler de la même façon.

Ainsi, dans ce cas, la détection simultanée de la position de fermeture (graduation « 0 » = « zéro » par exemple) sur le détecteur 5 de position et d'une chute de pression, il est ainsi possible de détecter instantanément et automatiquement le mode d'utilisation de la bouteille 2. Un algorithme de calcul d'autonomie adapté à ce mode de soutirage peut être réalisé par la l'organe 7 d'acquisition de stockage et de traitement de données.

Cet algorithme de calcul d'autonomie basé sur la mesure de pression 10 peut ainsi être automatiquement enclenché.

De plus, lorsque l'organe 5 de commande manuelle est dans sa position de fermeture et que la variation du signal représentatif de la pression de fluide au sein d'une bouteille 2 est supérieure à un seuil de variation déterminé, l'organe 7 d'acquisition de stockage et de traitement de données peut être configuré pour calculer une information d'autonomie de fluide restant à partir de la mesure du signal de pression initiale et de la variation de ce signal de pression donné par le capteur 10 de pression. L'organe 7 d'acquisition de stockage et de traitement de données peut notamment être configuré pour commander l'affichage sur l'afficheur 8 de cette information d'autonomie calculée et/ou une information relative à la pression ou la quantité initiale de fluide dans la bouteille 2.

Le capteur 10 de pression peut être situé par exemple au niveau de l'extrémité amont du premier circuit 3 de soutirage et/ou au niveau du second 11 circuit de soutirage.

De plus, l'organe 7 d'acquisition de stockage et de traitement de données peut être configuré, en réponse à la réception de ce signal de débit et/ou de pression imposé, pour commander l'affichage sur l'afficheur 8 d'une information relative du débit et/ou la pression de fluide imposé par l'organe 4 de régulation.

Comme illustré à la figure 3, le capteur 9 de position de l'organe 5 de commande peut comprendre par exemple un mécanisme 19 engrenant avec l'organe 5 de commande (un système à engrenage et/ou crantage) et un potentiomètre 39. Le mécanisme comporte une pièce mobile 29 (par exemple une roue ou une tige ou une crémaillère) formant un curseur du potentiomètre 39. De cette façon, le capteur 9 de position fournit une valeur de tension et/ou de résistance déterminée en fonction de la position de l'organe 5 de commande.

Dans l'exemple de la figure 4, le capteur 9 de position de l'organe 5 de commande comprend un mécanisme engrenant avec l'organe 5 de commande comprenant un codeur optique et/ou numérique 49, par exemple un codeur à fils (fils conducteur et un fil de masse). Le codeur 49 fournit un signal numérique déterminé en fonction de la position de l'organe 5 de commande. Selon la position du mécanisme, un ou plusieurs fils sont sous tension ou court-circuités formant une pluralité de signaux distincts pour caractériser différentes positions (par exemple 2ⁿ⁻¹ pour un système à n fils).

Comme illustré à la figure 5, le capteur 9 de position de l'organe 5 de commande peut comprendre un système magnétique comportant au moins un aimant 59 solidaire de l'organe 5 de commande et au moins un détecteur 69, 79 de champ magnétique du au moins un aimant 59. Par exemple trois aimants 59 sont solidaires de l'organe 5 de commande. En cas de déplacement (tel qu'une rotation) de l'organe 5 de commande, un détecteur 69 détecte par exemple un champ magnétique E en fonction du déplacement D qui oscille et permet de caractériser une pluralité de positions. Lorsque le dispositif comprend un second détecteur 79 (ou plus), plusieurs signaux distincts peuvent être exploité simultanément pour améliorer la détection des positions distinctes.

Comme illustré aux figures 7 et 8, le capteur 9 de position de l'organe 5 de commande peut comprendre un système capacitif mesurant 109 une capacité électrique entre une référence fixe 89 magnétique et une partie mobile 99 liée à l'organe 5 de commande

Tous ces systèmes présentent l'avantage d'une détection fiable sans nécessiter de prévoir de fils électriques associés à une partie mobile du mécanisme.

Le système à potentiomètre et plus généralement chaque système de détection peut être calibré facilement en fabrication.

Par exemple, le potentiomètre 39 ou détecteur du capteur 9 de position de l'organe 5 de commande peut être calibré en mesurant la valeur de tension ou de résistance (voir de champ magnétique et de capacité) qu'il fournit correspondant à la position dite de fermeture (débit nul). Puis, il est possible de mesurer la valeur de tension ou de résistance fournie par le potentiomètre 39 correspondant à une position de l'organe 5 de commande extrême par rapport à la position de fermeture (par exemple 15 litres /minute). Les valeurs intermédiaires de tension ou de résistance fournie par le potentiomètre 39 étant attribuées respectivement aux positions intermédiaires de l'organe 5 de commande entre la position de fermeture et la position extrême. (Idem pour la détection d'une autre grandeur physique, champ magnétique, capacité... où les positions intermédiaires du signal peuvent être affectées respectivement aux positions intermédiaires de l'organe 5 de commande).

Alternativement ou cumulativement, le potentiomètre 39 du capteur 9 de position de l'organe 5 de commande peut être calibré en mesurant la valeur de tension ou de résistance qu'il fournit correspondant une position de l'organe 5 de commande dans laquelle aucune variation de pression n'est mesurée par le capteur 10 de pression pendant une durée déterminée, par exemple une à trois minutes. Cette position (cette valeur du signal) est définie comme étant la position de fermeture du circuit (débit nul). Ce mode de définition de la position de fermeture peut être appliqué aux autres exemples (champ magnétique, capacité...).

L'organe 7 d'acquisition de stockage et de traitement de données peut ainsi être configuré pour recevoir à la fois le signal de pression P mesurée du capteur 10 de pression et le signal de débit et/ou de pression D fourni par le capteur 9 de position. L'organe 7 d'acquisition de stockage et de traitement de données peut ainsi être programmé pour calculer une information d'autonomie de fluide restant à partir de ces deux informations, l'autonomie de fluide restant étant déterminée par exemple en calculant, à partir de la pression initiale mesurée, la diminution temporelle théorique de pression ou de la quantité de gaz générée par le débit et/ou la pression D de soutirage imposé par l'organe 4 de régulation.

De plus, l'organe 7 d'acquisition de stockage et de traitement de données peut être configuré pour :
- calculer la variation de quantité ou de pression du fluide réelle mesurée par le capteur 10 de pression,
- calculer la variation de quantité ou de pression de fluide théorique imposée par l'organe 4 de régulation,
- comparer la variation de quantité ou de pression réelle mesurée par le capteur 10 de pression avec la variation de quantité ou de pression théorique imposée par l'organe 4 de régulation et
- générer un signal d'alerte en cas de divergence entre ces dernières supérieure à un seuil de sécurité déterminé (par exemple une divergence de 15 à 30% et notamment 25%)

L'information d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe (4) de régulation), selon une formule par exemple du type : Temps restant=Pression initiale/variation de pression imposée (ou respectivement : Temps restant= Contenu de fluide restant/variation de quantité imposée).

Les variations de quantité ou de pression théoriques peuvent être calculées par exemple via l'équation des gaz parfait PV=nRT ou réels PV= ZnRT (unités S.I.), avec P la pression mesurée, V le volume connu de la bouteille, n la quantité , R la constante des gaz parfaits et T la température mesurée ou approximée à la température ambiante mesurée, Z le facteur de compressibilité supposé connu (table ou calcul). De même les conversions entre pression et quantité peuvent être calculées via l'équation des gaz parfait ou toute autre formule équivalente, le volume de la bouteille 2 étant connu et renseigné dans le l'organe 7 d'acquisition de stockage et de traitement de données et la température peut être mesurée par un capteur dans la bouteille ou extérieur ambiant ou calculée ou renseignée ou approximée

L'organe 7 d'acquisition de stockage et de traitement de données peut être configuré pour calculer une information d'autonomie ou de contenu de fluide sur un intervalle de temps déterminé compris entre quinze secondes et dix minutes et de préférence entre trente secondes et cinq minutes, à partir du signal de pression mesuré par le capteur 10 de pression. L'organe 7 d'acquisition de stockage et de traitement de données peut être configuré également pour comparer cette information d'autonomie calculée sur la base du signal de pression P mesuré par rapport à l'information d'autonomie théorique calculée à partir de la variation de quantité ou de pression imposée par l'organe 4 de régulation.

La mesure dynamique de pression peut permettre de réajuster si besoin plus précisément l'affichage du débit effectif soutiré et/ou l'autonomie affichée.

De même, l'organe 7 d'acquisition de stockage et de traitement de données peut être configuré pour recalculer et afficher éventuellement automatiquement une mise à jour de l'information d'autonomie ou de contenu de fluide à la réception d'un signal du capteur 9 de position indiquant un changement débit et/ou la pression de fluide imposé par l'organe 4 de régulation via l'organe 5 de commande.

L'organe 5 de commande manuelle et/ou l'organe 4 de régulation peut être mobile selon une pluralité de positions discrètes (mécaniquement stables ou non) correspondant respectivement à des valeurs de débit et/ou la pression de fluide admis à passer de l'extrémité 13 amont vers l'extrémité aval. Selon une particularité avantageuse possible, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 7 d'acquisition de stockage et de traitement de données est configuré pour sélectionner et afficher sur l'afficheur 8 l'une ou les deux de ces valeurs adjacentes, et de préférence à la valeur la plus critique ou la plus défavorable pour l'utilisateur.

Alternativement, dans cette situation l'organe 7 d'acquisition de stockage et de traitement de données peut être configuré pour afficher sur l'afficheur 8 un intervalle de valeurs délimité par ces valeurs adjacentes ou pour supprimer tout ou partie de l'affiche de ces valeurs.

Ceci permet d'alerter ergonomiquement l'utilisateur d'une manipulation erronée en affichant une information pertinente mais pénalisante l'obligeant à corriger sa sélection (ou en supprimant cet affichage).

Par exemple, lorsque l'organe 5 de commande manuelle est disposé dans une position intermédiaire entre deux valeurs adjacentes respectives de débit, l'organe 7 d'acquisition de stockage et de traitement de données est configuré pour calculer et afficher sur l'afficheur 8 une information d'autonomie ou de contenu de fluide restant dans la bouteille sur la base de la valeur la plus élevée des deux valeurs adjacentes.

Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour calculer une autonomie basée sur la valeur de débit soutiré de n+1 litre par minute (autonomie moindre que s'elle avait été calculée avec la valeur de n litre par minute).

De même, lorsque l'organe 5 de commande manuelle est disposé dans une position intermédiaire entre deux valeurs adjacentes respectives de débit, l'organe 7 d'acquisition de stockage et de traitement de données peut être configuré pour afficher sur l'afficheur 8 d'une information relative au débit soutiré imposé par l'organe 4 de régulation correspondant à la valeur la plus basse des deux valeurs adjacentes. Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour afficher sur l'afficheur 8 une information basée sur la valeur de débit soutiré de n litre par minute (débit le plus faible qui peut par exemple être en-dessous de la prescription médicale). Ceci fera réagir l'utilisateur en vue de corriger la sélection de débit.

Le dispositif peut être configuré pour dans ce cas délivrer un débit de fluide correspondant à l'une des deux valeurs adjacentes, notamment la valeur affichée.

De plus, l'organe 7 d'acquisition de stockage et de traitement de données peut être configuré pour comporter une fonction de sceau garantie indiquant que la bouteille 2 n'a pas été utilisée suite à un remplissage. Ainsi, avant un premier soutirage, l'organe 7 d'acquisition de stockage et de traitement de données peut commander l'affichage sur l'afficheur 8 d'une information fixe relative au contenu de fluide dans la bouteille 2 (et/ou l'information du type « bouteille pleine ») tant que le capteur 9 de position n'a pas transmis un signal représentatif d'un débit et/ou la pression de fluide soutiré du réservoir 2 pendant une durée déterminée et/ou correspondant à une quantité déterminée de fluide (par exemple 20 litre de gaz soutiré). Cette détection peut être assurée ou complétée par l'information donnée par le capteur 10 de pression.

Bien que l'invention soit relativement simple et peu coûteuse on conçoit aisément qu'elle permet d'afficher plus rapidement des informations de débit et d'autonomie.

L'invention s'applique avantageusement aux bouteilles de gaz sous pression, notamment aux bouteilles contenant de l'oxygène sous pression.

## Revendications

1. Robinet pour bouteille de fluide sous pression comprenant un corps muni d'une extrémité destinée à être montée dans l'orifice d'une bouteille, le corps du robinet (1) abritant au moins un premier circuit (3, 11) de soutirage comprenant une première extrémité (13) amont destinée à communiquer le volume de stockage d'une bouteille de fluide sous pression et une seconde extrémité (23) aval destinée à être raccordée à un organe utilisateur du gaz soutiré, ledit au moins premier circuit (3, 11) comprenant un organe d'isolement permettant d'ouvrir ou de fermer ledit circuit (3, 11) de soutirage, le robinet (1) comprenant un dispositif (6) électronique d'indication de donnée(s) relative(s) au contenu de fluide dans une bouteille raccordée au robinet (1), le dispositif (6) électronique d'indication comprenant un organe (7) d'acquisition de stockage et de traitement de données et au moins un afficheur (8) de données relié à l'organe (7) d'acquisition de stockage et de traitement de données, le robinet comprenant en outre un capteur (10) de pression destiné à mesurer la pression au sein du volume de stockage d'une bouteille (2) de fluide raccordée au robinet (1), le capteur (10) de pression étant relié à l'organe (7) d'acquisition de stockage et de traitement de données pour transmettre à ce dernier un signal représentatif de la pression de fluide mesurée, **caractérisé en ce que** l'organe (7) d'acquisition de stockage et de traitement de données est configuré pour mesurer la variation du signal représentatif de la pression de fluide sur la base du signal fourni par le capteur (10) de pression et comparer cette variation du signal mesuré à un seuil de soutirage déterminé et, lorsque la variation du signal représentatif de la pression de fluide mesuré par le capteur (10) de pression est supérieure au seuil de soutirage déterminé, l'organe (7) d'acquisition de stockage et de traitement de données est configuré pour détecter le début d'un soutirage de gaz et, en réponse, pour commander l'affichage sur afficheur (8) d'au moins une information relative audit soutirage dont le début a été détecté par le capteur de pression, et **en ce que**, lorsque la variation du signal représentatif de la pression de fluide mesuré par le capteur (10) de pression est supérieure audit seuil soutirage, l'organe (7) d'acquisition de stockage et de traitement de données est configuré pour détecter, à partir du signal du capteur (10) de pression, au moins une caractéristique de l'allure de la variation de pression de fluide dans la bouteille du fait du soutirage, ladite caractéristique de l'allure de la variation de pression de fluide dans la bouteille comprend au moins l'un parmi: un caractère périodique de la variation de pression ou de la variation de quantité, la fréquence de la variation de pression ou de quantité, une moyenne des mesures de pression, les maximum et minimum des mesures de pression, une valeur moyenne ou instantanée de la variation de pression, et **en ce que** l'organe (7) d'acquisition de stockage et de traitement de données est configuré pour comparer au moins une caractéristique de l'allure de la variation de pression détectée avec une caractéristique d'allure de variation de pression déterminée représentative de la consommation en gaz d'un ventilateur médical et, lorsque la différence en valeur absolue entre ladite caractéristique détectée et la caractéristique déterminée est inférieure à un seuil déterminé, détecter un soutirage correspondant à l'alimentation en fluide d'un ventilateur médical et commander l'affichage sur afficheur (8) d'au moins une information correspondante relative à l'alimentation en fluide d'un ventilateur médical.

2. Robinet selon la revendication1, **caractérisé en ce que** l'organe (7) d'acquisition de stockage et de traitement de données est configuré pour détecter, à partir du signal du capteur (10) de pression, une caractéristique d'allure de variation de la pression discontinue périodique ou quasi périodique, c'est-à-dire des chutes de pression alternées avec des périodes de pression stable, chaque période de chute de pression étant comprise entre 1,5 à 6 secondes et correspondant à un régime ventilatoire de 10 à 40 périodes par minute.

3. Robinet selon l'une quelconque des revendications 1 à 2 **caractérisé en ce que** le capteur (10) de pression mesure la pression à une fréquence d'échantillonnage déterminée et variable et **en ce que**, l'organe (7) d'acquisition de stockage et de traitement de données est configuré pour augmenter la fréquence d'échantillonnage de mesure du capteur (10) de pression en réponse à une détection d'un début de soutirage.

4. Robinet selon la revendication 3 **caractérisé en ce que** lorsqu'aucun soutirage n'est détecté, le capteur (10) de pression mesure la pression à une fréquence d'échantillonnage d'une mesure toutes les trente secondes à deux minutes et **en ce que**, en cas de détection d'un soutirage, la fréquence d'échantillonnage est d'une mesure toutes les 0,1 à 3 secondes, par exemple une mesure par seconde.

5. Robinet selon la revendication 3 ou 4 **caractérisé en ce que** lorsqu'un soutirage est détecté le capteur (10) de pression est configuré pour mesurer la pression uniquement pendant des intervalles temporels déterminés espacés de vingt à soixante secondes, notamment de trente secondes, chaque intervalle temporel durant entre quatre à dix secondes, par exemple six secondes, et **en ce que**, pendant chaque intervalle temporel la pression est mesurée toutes les 50 ms à 200 ms et de préférence toutes les 100 ms.

6. Robinet selon l'une quelconque des revendications 1 à 5 **caractérisé en ce qu'**il comprend en plus du premier (3) circuit de soutirage un second (11) circuit de soutirage, les premier et second circuits de soutirage comprenant chacun une première extrémité amont destinée à communiquer le volume de stockage d'une bouteille de fluide sous pression et une seconde extrémité aval destinée à être raccordée à un organe utilisateur du gaz soutiré, le premier circuit (3) de soutirage comprenant un organe (4) de régulation du débit et/ou de la pression du fluide soutiré entre ses extrémités amont (13) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (13) amont vers l'extrémité aval (23) du premier circuit (3) de soutirage selon la position de l'organe (5) de commande par rapport au corps (5), l'organe (4) de régulation étant déplaçable entre au moins une position d'ouverture du circuit (3) et une position dite « de fermeture » correspondant à une fermeture du premier circuit (3) de soutirage, en position de fermeture de l'organe (4) de régulation le débit de fluide admis à passer de l'extrémité (13) amont vers l'extrémité aval (23) du premier circuit (3) de soutirage étant nul, c'est-à-dire que l'organe d'isolement du premier circuit (3) comprend l'organe (4) de régulation, le robinet (1) comportant un capteur (9) de position de l'organe (4) de régulation, relié à l'organe (7) d'acquisition de stockage et de traitement de données pour transmettre à ce dernier un signal représentatif de sa position d'ouverture ou de fermeture, le second circuit (11) de soutirage comprenant une portion évitant l'organe (4) de régulation du débit et/ou la pression du premier circuit de soutirage (3), et **en ce que**, lorsque l'organe (4) de régulation est dans sa position de fermeture et que la variation du signal représentatif de la pression de fluide au sein d'une bouteille est supérieure au seuil de soutirage, l'organe (7) d'acquisition de stockage et de traitement de données est configuré pour détecter un soutirage de fluide via le second circuit (11) de soutirage ou via une fuite de fluide et commander l'affichage sur l'afficheur (8) d'une information relative à ce soutirage détecté.

7. Robinet selon la revendication 6, **caractérisé en ce que** le capteur (9) de position de l'organe (4) de régulation mesure ou détecte la position de l'organe (5) de commande manuelle de l'organe (4) de régulation, le capteur (9) de position étant relié à l'organe (7) d'acquisition de stockage et de traitement de données pour transmettre à ce dernier un signal représentatif du débit et/ou la pression de fluide imposé par l'organe (4) de régulation à partir de la position détectée de l'organe (5) de commande.

8. Robinet selon la revendication 6 ou 7, **caractérisé en ce que** en réponse au signal de débit et/ou de pression imposé mesuré par le capteur (5) de position et au signal de pression mesurée par le capteur (10) de pression, l'organe (7) d'acquisition de stockage et de traitement de données est configuré pour calculer et afficher sur l'afficheur (8) une information relative au mode d'utilisation du robinet (soutirage via le premier (3) ou via le second circuit (11) de soutirage) et éventuellement une information relative à une éventuelle fuite.

9. Robinet selon l'une quelconque des revendications 6 à 7, **caractérisé en ce que** lorsque l'organe (4) de régulation est dans sa position de fermeture et que la variation du signal représentatif de la pression de fluide mesuré par le capteur (10) de pression est inférieure au seuil de soutirage, l'organe (7) d'acquisition de stockage et de traitement de données est configuré pour commander l'affichage sur l'afficheur (8) d'une information fixe relative à la pression et/ou la quantité de fluide dans la bouteille (2).

10. Robinet selon la revendication 9, **caractérisé en ce que**, lorsque l'organe (4) de régulation est dans sa position de fermeture et que la variation du signal représentatif de la pression de fluide est supérieure au seuil de soutirage, l'organe (7) d'acquisition de stockage et de traitement de données est configuré pour calculer une information d'autonomie de fluide restant à partir de la mesure du signal de pression (P) initiale et de la variation, à partir de ce signal de pression (P) donné par le capteur (10) de pression, et **en ce que** l'organe (7) d'acquisition de stockage et de traitement de données est configuré pour commander l'affichage sur l'afficheur (8) de cette information d'autonomie calculée et/ou une information relative à la pression ou la quantité initiale de fluide dans la bouteille (2).

11. Bouteille de fluide sous pression, notamment de gaz sous pression, comprenant un robinet selon l'une quelconque des revendications 1 à 10.

12. Bouteille selon la revendication 11, **caractérisé en ce que** l'organe (7) d'acquisition de stockage et de traitement de données est configuré pour calculer et afficher, à partir du signal du capteur (10) de pression, l'autonomie de gaz de la bouteille à partir d'une pression initiale de gaz dans la bouteille connue et estimant la chute de pression entre des séquences de soutirage similaires, en utilisant l'un parmi : une valeur moyenne de soutirage, une valeur de variation de pression sur un plateau, les valeurs minimum ou maximum de chaque séquence de soutirage, pour calculer la chute de pression entre des séquences temporelles déterminées et en estimant le moment où la pression de gaz dans la bouteille sera nulle.

## Patentansprüche

1. Schließhahn für eine Flasche mit unter Druck stehendem Fluid, einen Körper umfassend, der mit einem Ende versehen ist, das zum Anbringen in der Öffnung einer Flasche bestimmt ist, wobei der Körper des Schließhahns (1) mindestens einen ersten Entnahmekreis (3, 11) beherbergt, die ein erstes stromaufwärtiges Ende (13), das zum Übermitteln des Speichervolumens einer Flasche mit unter Druck stehendem Fluid bestimmt ist und ein zweites stromabwärtiges Ende (23), das zum Anschluss an ein Benutzerelement des entnommenen Gases bestimmt ist, umfasst, wobei der mindestens erste Kreis (3, 11) ein Absperrelement umfasst, welches es ermöglicht, den Entnahmekreis (3, 11) zu öffnen oder zu schließen, wobei der Schließhahn (1) eine elektronische Vorrichtung (6) zum Anzeigen von Daten in Bezug auf den oder Fluidinhalt in einer mit dem Schließhahn (1) verbundenen Flasche umfasst, wobei die elektronische Anzeigevorrichtung (6) ein Erfassungselement (7) zur Datenspeicherung und - verarbeitung und mindestens eine mit dem Erfassungselement (7) zur Datenspeicherung und -verarbeitung verbundene Datenanzeige (8) umfasst, wobei der Schließhahn weiter einen Drucksensor (10) umfasst, der zum Messen des Drucks innerhalb des Speichervolumens einer mit dem Schließhahn (1) verbundenen Fluidflasche (2) bestimmt ist, wobei der Drucksensor (10) mit dem Erfassungselement (7) zur Datenspeicherung und -verarbeitung verbunden ist, um letzterem ein für den gemessenen Fluiddruck repräsentatives Signal zu übermitteln, **dadurch gekennzeichnet, dass** das Erfassungselement (7) zur Datenspeicherung und -verarbeitung konfiguriert ist, um die Änderung des Signals, das für den Fluiddruck repräsentativ ist, auf der Basis des vom Drucksensor (10) gelieferten Signals zu messen und diese Änderung des gemessenen Signals mit einer bestimmten Entnahmeschwelle zu vergleichen, und, wenn die Änderung des Signals, das für den vom Drucksensor (10) gemessenen Fluiddruck repräsentativ ist, größer als die bestimmte Entnahmeschwelle ist, das Erfassungselement (7) zur Datenspeicherung und -verarbeitung konfiguriert ist, um den Beginn einer Gasentnahme zu erkennen und, als Reaktion, um die Anzeige mindestens einer Information relativ zur Entnahme auf der Anzeige (8) zu steuern, deren Beginn durch den Drucksensor erkannt wurde, und dadurch, dass, wenn die Änderung des Signals, das für den vom Drucksensor (10) gemessenen Fluiddruck repräsentativ ist, größer als die Entnahmeschwelle ist, das Erfassungselement (7) zur Datenspeicherung und - verarbeitung konfiguriert ist, aus dem Signal des Drucksensors (10) mindestens eine Eigenschaft des Verhaltens der Änderung des Fluiddrucks in der Flasche aufgrund der Entnahme zu erkennen, wobei die Eigenschaft des Verhaltens der Änderung des Fluiddrucks in der Flasche mindestens eines von Folgendem umfasst: ein periodisches Merkmal der Druckänderung oder der Mengenänderung, die Häufigkeit der Druck- oder Mengenänderung, einen Mittelwert der Druckmessungen, den Höchst- und Mindestwert der Druckmessungen, einen Mittelwert oder Momentanwert der Druckänderung, und dadurch, dass das Erfassungselement (7) zur Datenspeicherung und -verarbeitung konfiguriert ist, mindestens eine bestimmte Eigenschaft des Verhaltens der Druckänderung mit einer bestimmten für den Gasverbrauch eines medizinischen Beatmungsgeräts repräsentativen Eigenschaft des Verhaltens der Druckänderung zu vergleichen und, wenn die Differenz im Absolutwert zwischen der erkannten Eigenschaft und der bestimmten Eigenschaft kleiner als ein bestimmter Schwellenwert ist, eine Entnahme entsprechend der Fluidversorgung eines medizinischen Beatmungsgeräts zu erkennen und die Anzeige von mindestens einer entsprechenden Information bezüglich der Fluidversorgung eines medizinischen Beatmungsgeräts auf der Anzeige (8) zu steuern.

2. Schließhahn nach Anspruch1, **dadurch gekennzeichnet, dass** das Erfassungselement (7) zur Datenspeicherung und -verarbeitung zum Erkennen aus dem Signal des Drucksensors (10) einer periodischen oder quasi-periodischen diskontinuierlichen Eigenschaft des Verhaltens der Druckänderung, das heißt wechselnder Druckabfälle mit stabilen Druckperioden konfiguriert ist, wobei jede Druckabfallperiode zwischen 1,5 und 6 Sekunden beträgt und einem Beatmungsregime von 10 bis 40 Perioden pro Minute entspricht.

3. Schließhahn nach einem der Ansprüche 1 bis 2, **dadurch gekennzeichnet, dass** der Drucksensor (10) den Druck bei einer bestimmten und variablen Abtastfrequenz misst, und dass das Erfassungselement (7) zur Datenspeicherung und -verarbeitung zum Erhöhen der Messabtastfrequenz des Drucksensors (10) als Reaktion auf eine Erkennung eines Entnahmebeginns konfiguriert ist.

4. Schließhahn nach Anspruch 3, **dadurch gekennzeichnet, dass**, der Drucksensor (10), wenn keine Entnahme erkannt wird, den Druck bei einer Abtastfrequenz einer Messung alle dreißig Sekunden bis zwei Minuten misst, und dadurch, dass bei einer Erkennung einer Entnahme, die Abtastfrequenz eine Messung alle 0,1 bis 3 Sekunden, zum Beispiel eine Messung pro Sekunde, lautet.

5. Schließhahn nach Anspruch 3 oder 4, **dadurch gekennzeichnet, dass** der Drucksensor (10), wenn eine Entnahme erkannt wird, konfiguriert ist, nur in bestimmten Zeitintervallen von zwanzig bis sechzig Sekunden, insbesondere von dreißig Sekunden zu messen, wobei jedes Zeitintervall zwischen vier und zehn Sekunden, beispielsweise sechs Sekunden, beträgt, und dadurch, dass während jedes Zeitintervalls der Druck alle 50 ms bis 200 ms und vorzugsweise alle 100 ms gemessen wird.

6. Schließhahn nach einem der Ansprüche 1 bis 5, **dadurch gekennzeichnet, dass** er zusätzlich zum ersten (3) Entnahmekreis einen zweiten (11) Entnahmekreis umfasst, wobei der erste und zweite Entnahmekreis jeweils ein erstes stromaufwärtiges Ende umfassen, das zum Übermitteln des Speichervolumens einer unter Druck stehenden Fluidflasche bestimmt ist, und ein zweites stromabwärtiges Ende, das zum Anschluss an ein Benutzerelement des entnommenen Gases bestimmt ist, wobei der erste Entnahmekreis (3) ein Regulierelement (4) des Durchflusses und/oder des Drucks des entnommenen Fluids zwischen seinen stromaufwärtigen (13) und stromabwärtigen (23) Enden umfasst, wobei der Schließhahn (1) ein manuelles Steuerelement (5) des Regulierelements (4) umfasst, wobei das Steuerelement (5) relativ zum Körper des Schließhahns (1) beweglich angebracht ist und mit dem Regulierelement (4) zusammenwirkt, um den Fluiddurchfluss und/oder -druck zu steuern, der zugelassen ist, von dem stromaufwärtigen Ende (13) zum stromabwärtigen Ende (23) des ersten Entnahmekreises (3) gemäß der Position des Steuerelements (5) in Bezug auf den Körper (5) zu zirkulieren, wobei das Regulierelement (4) zwischen mindestens einer Öffnungsstellung des Kreises (3) und einer sogenannten "Schließstellung", die einem Schließen des ersten Entnahmekreises (3) entspricht, bewegbar ist, wobei in der Schließstellung des Regulierelements (4) der Fluidduchfluss, der zugelassen ist, von dem stromaufwärtigen Ende (13) zum stromabwärtigen Ende (23) des ersten Entnahmekreises (3) zu passieren, gleich Null ist, das heißt, dass das Absperrelement des ersten Kreises (3) das Regulierelement (4) umfasst, wobei der Schließhahn (1) einen Positionssensor (9) des Regulierelements (4) aufweist, der mit dem Erfassungselement (7) zur Datenspeicherung und -verarbeitung verknüpft ist, um letzterem ein für seine Öffnungs- oder Schließstellung repräsentatives Signal zu übermitteln, wobei der zweite Entnahmekreis (11) einen Abschnitt umfasst, der das Regulierelement (4) des Durchflusses und/oder des Drucks des ersten Entnahmekreises (3) umgeht, und dadurch, dass, wenn sich das Regulierelement (4) in seiner Schließstellung befindet und die Änderung des für den Fluiddruck innerhalb einer Flasche repräsentativen Signals größer als die Entnahmeschwelle ist, das Erfassungselement (7) zur Datenspeicherung und - verarbeitung konfiguriert ist, eine Fluidentnahme über den zweiten Entnahmekreis (11) oder über eine Fluidleckage zu erkennen und die Anzeige einer Information bezüglich dieser erkannten Entnahme auf der Anzeige (8) zu steuern.

7. Schließhahn nach Anspruch 6, **dadurch gekennzeichnet, dass** der Positionssensor (9) des Regulierelements (4) die Position des manuellen Steuerelementes (5) des Regulierelements (4) misst oder erkennt, wobei der Positionssensor (9) mit dem Erfassungselement (7) zur Datenspeicherung und - verarbeitung verknüpft ist, um letzterem ein für den Durchfluss und/oder den Fluiddruck, den das Regulierelement (4) aus der erkannten Position des Steuerelementes (5) auferlegt, repräsentatives Signal zu übermitteln.

8. Schließhahn nach Anspruch 6 oder 7, **dadurch gekennzeichnet, dass** das Erfassungselement (7) zur Datenspeicherung und -verarbeitung als Reaktion auf das vom Positionssensor (5) auferlegte Durchfluss- und/oder Drucksignal und das vom Drucksensor (10) gemessene Drucksignal konfiguriert ist, um eine Information bezüglich der Benutzungsart des Schließhahns (Entnahme über den ersten (3) oder über den zweiten Entnahmekreis (11)) und gegebenenfalls eine Information bezüglich eines möglichen Lecks zu berechnen und auf der Anzeige (8) anzuzeigen.

9. Schließhahn nach einem der Ansprüche 6 bis 7, **dadurch gekennzeichnet, dass**, wenn sich das Regulierelement (4) in seiner Schließstellung befindet und die Änderung des Signals, das für den vom Drucksensor (10) gemessenen Fluiddruck repräsentativ ist, niedriger als die Entnahmeschwelle ist, das Erfassungselement (7) zur Datenspeicherung und -verarbeitung konfiguriert ist, die Anzeige einer festen Information bezüglich des Drucks und/oder der Fluidmenge in der Flasche (2) auf der Anzeige (8) zu steuern.

10. Schließhahn nach Anspruch 9, **dadurch gekennzeichnet, dass**, wenn sich das Regulierelement (4) in seiner Schließstellung befindet und die Änderung des Signals, das für den Fluiddruck repräsentativ ist, größer als die Entnahmeschwelle ist, das Erfassungselement (7) zur Datenspeicherung und -verarbeitung konfiguriert ist, aus der Messung des Ausgangsdrucksignals (P) und der Änderung eine verbleibende Fluidautonomieinformation, aus diesem vom Drucksensor (10) abgegebenen Drucksignal (P), zu berechnen, und dadurch, dass das Erfassungselement (7) zur Datenspeicherung und -verarbeitung konfiguriert ist, die Anzeige dieser berechneten Autonomieinformation und/oder einer Information bezüglich des Drucks oder der Ausgangsflüssigkeitsmenge in der Flasche (2) auf der Anzeige (8) zu steuern.

11. Flasche mit unter Druck stehendem Fluid, insbesondere für unter Druck stehendes Gas, die einen Schließhahn nach einem der Ansprüche 1 bis 10 umfasst.

12. Flasche nach Anspruch 11, **dadurch gekennzeichnet, dass** das Erfassungselement (7) zur Datenspeicherung und -verarbeitung konfiguriert ist, aus dem Signal des Drucksensors (10) die Gasautonomie der Flasche aus einem Ausgangsgasdruck in der Flasche zu berechnen und anzuzeigen, und dass der Druckabfall zwischen ähnlichen Entnahmesequenzen unter Verwendung eines von Folgendem geschätzt wird: eines mittleren Entnahmewerts, eines Druckänderungswerts auf einer Platte, der Mindest- oder Höchstwerte jeder Entnahmesequenz, um den Druckabfall zwischen bestimmten Zeitsequenzen zu berechnen und den Zeitpunkt zu schätzen, wann der Gasdruck in der Flasche gleich Null sein wird.

## Claims

1. Valve for a pressurised fluid cylinder comprising a body featuring an end configured to be mounted in an orifice of the cylinder, the valve body (1) housing at least one extraction circuit (3, 11) comprising a first upstream end (13) configured to transfer the storage volume of a pressurised fluid cylinder and a second downstream end (23) configured to be connected to an extracted gas-using member, said at least first circuit (3, 11) comprising an isolation member used to open or close said extraction circuit (3, 11), the valve (1) comprising an electronic device (6) displaying data relating to the fluid content of a cylinder connected to the valve (1), the electronic display (6) comprising a data acquisition, storage and processing unit (7) and at least one data display (8) connected to the data acquisition, storage and processing unit (7), the valve further comprising a pressure sensor (10) configured to measure the pressure of the storage volume inside a fluid cylinder (2) connected to the valve (1), the pressure sensor (10) being connected to the data acquisition, storage and processing unit (7) whereto it is configured to transmit a signal reflecting the measured fluid pressure, **characterised in that** the data acquisition, storage and processing unit (7) is configured to measure the variation of the signal reflecting the fluid pressure based on the signal provided by the pressure sensor (10) and to compare this measured signal variation with a predetermined extraction threshold and, when the variation of the signal reflecting the pressure of the fluid measured by the pressure sensor (10) exceeds the predetermined extraction threshold, the data acquisition, storage and processing unit (7) is configured to detect the start of a gas extraction process and, in response, to show on the display (8) at least one information relating to said extraction, the start of which was detected by the pressure sensor, and **in that**, when the variation of the signal reflecting the fluid pressure measured by the pressure sensor (10) exceeds said extraction threshold, the data acquisition, storage and processing unit (7) is configured to detect, based on the signal of the pressure sensor (10), at least one characteristic of the variation rate of the fluid pressure inside the cylinder owing to the extraction, said characteristic of the rate of fluid pressure variation comprising at least one of the following: a periodic nature of the pressure variation or of the quantity variation, the frequency of the pressure variation or quantity, an average of the pressure measurements, the maximum and minimum values of the pressure measurements and an average or instantaneous value of the pressure variation, and **in that** the data acquisition, storage and processing unit (7) is configured to compare at least one characteristic of the detected rate of the pressure variation with a characteristic of the determined rate of pressure variation, and when the absolute value difference between said detected characteristic and the determined characteristic is below a predetermined threshold, to detect an extraction corresponding to the fluid supply to a medical ventilator and to show on a display (8) at least one corresponding information relating to the supply of fluid to a medical ventilator.

2. Valve according to claim 1, **characterised in that** the data acquisition, storage and processing unit (7) is configured to detect, based on the signal of the pressure sensor (10), a characteristic of the periodic or near-periodic discontinued pressure variation rate, i.e. pressure drops alternating with stable pressure periods, each pressure drop ranging from 1.5 to 6 seconds and corresponding to a ventilation rate of 10 to 40 periods per minute.

3. Valve according to any one of the claims 1 to 2, **characterised in that** the pressure sensor (10) measures the pressure at a predetermine and variable sampling frequency and **in that** the data acquisition, storage and processing unit (7) is configured to increase the measurement sampling frequency of the pressure sensor (10) in response to a detected start of an extraction process.

4. Valve according to claim 3, **characterised in that** when no extraction is detected, the pressure sensor (10) measures the pressure at a sampling frequency of one measurement every thirty seconds to two minutes, and **in that**, if an extraction is detected, the sampling frequency is of one measurement every 0.1 to 3 seconds, or for example of one measurement per second.

5. Valve according to claim 3 or 4, **characterised in that** when an extraction is detected, the pressure sensor (10) is configured to measure the pressure only during predetermined time intervals every twenty to sixty seconds, in particular every thirty seconds, each time interval lasting from four to ten seconds, for example six seconds, and **in that**, during each time interval, the pressure is measured every 50 ms to 200 ms, and preferably every 100 ms.

6. Valve according to any one of the claims 1 to 5, **characterised in that** it includes, in addition to the first extraction circuit (3), a second extraction circuit (11), the first and second extractions circuits each comprising a first upstream end configured to transfer the storage volume of a pressurised fluid cylinder and a second downstream end configured to be connected to an extracted gas-using member, the first extraction circuit (3) comprising a unit (4) regulating the flow and/or pressure of the fluid extracted between the upstream (13) and downstream (23) ends, the valve (1) comprising a unit (5) to manually control the regulation unit (4), the control unit (5) being mounted moveable with respect to the body of the valve (1) and cooperating with the regulation unit (4) to control the flow and/or pressure of the fluid circulating from the upstream end (13) to the downstream end (23) of the first extraction circuit, depending on the position of the control unit (5) with respect to the body (5), the regulation unit (4) being movable from at least one open position of the circuit (3) and a "closed" position, which corresponds to a closed first extraction circuit (3), in a closed position of the unit (4) regulating the flow of fluid circulating from the upstream end (13) to the downstream end (23) of the first extraction circuit (3) being null, i.e. the insulation member of the first circuit (3) comprises the regulation unit (4), the valve (1) comprising a position sensor (9) of the position of the regulation unit (4), connected to the data acquisition, storage and processing unit (7) whereto it sends a signal reflecting its open or closed position, the second extraction circuit (11) comprising a section bypassing the unit (4) regulating the flow and/or the pressure of the first extraction circuit (3), and **in that**, when the regulation unit (4) is in a closed position and the variation of the signal reflecting the fluid pressure inside a cylinder exceeds the extraction threshold, the data acquisition, storage and processing unit (7) is configured to detect a fluid extraction through the second extraction circuit (11) or through a fluid leak, and to show on the display (8) an item of information relating to the detected extraction.

7. Valve according to claim 6, **characterised in that** the position sensor (9) of the regulation unit (4) measures or detects the position of the manual control unit (5) of the regulation unit (4), the position sensor (9) being connected to the data acquisition, storage and processing unit (7) whereto it sends a signal reflecting the flow and/or the pressure of the fluid imposed by the regulation unit (4) based on the detected position of the control unit (5).

8. Valve according to claim 6 or 7, **characterised in that** in response to the signal informing on the imposed flow and/or pressure measured by the position sensor (5) and to the signal informing on the pressure measured by the pressure sensor (10), the data acquisition, storage and processing unit (7) is configured to calculate and to show on the display (8) an information relating to the operating mode of the valve (extraction through the first extraction circuit (3) or through the second extraction circuit (11) and possibly an information relating to a leak, if any.

9. Valve according to any one of the claims 6 to 7, **characterised in that** when the regulation unit (4) is in a closed position and the variation of the signal reflecting the fluid pressure measured by the pressure sensor (10) is below the extraction threshold, the data acquisition, storage and processing unit (7) is configured to show on the display (8) a fixed information relating to the pressure and/or the quantity of fluid in the cylinder (2).

10. Valve according to claim 9, **characterised in that**, when the regulation unit (4) is in a closed position and the variation of the signal reflecting the fluid pressure is greater than the extraction threshold, the data acquisition, storage and processing unit (7) is configured to calculate an item of information relating to the remaining fluid autonomy based on the initial pressure (P) signal measurement and on the variation, itself based on the initial pressure (P) signal provided by the pressure sensor (10), and **in that** the data acquisition, storage and processing unit (7) is configured to show on the display (8) this calculated autonomy information and/or an information relating to the pressure or to the initial quantity of fluid in the cylinder (2).

11. Cylinder containing a pressurised fluid, namely a pressurised gas, comprising a valve according to any one of the claims 1 to 10.

12. Cylinder according to claim 11, **characterised in that** the data acquisition, storage and processing unit (7) is configured to calculate and display, based on the signal from the pressure sensor (10) the gas autonomy of the cylinder based on a known initial gas pressure in the cylinder and by assessing the pressure drop between similar extraction sequences, using one of the following: the average extraction value, a pressure variation value on a plateau, minimum and maximum values for each extraction sequence, to calculate the pressure drop between predetermined time sequences and by estimating the moment when the gas pressure in the cylinder will be null.
